# EUROPEAN PATENT SPECIFICATION

(11) **EP 2 786 932 B1**
(45) Date of publication and mention of the grant of the patent: **21.12.2016**
(21) Application number: 14160601.2
(22) Date of filing: 18.03.2014
(51) Int. Cl.: B64C 3/18, B64C 3/34

(54) **Continuously curved spar and method of manufacturing**
Kontinuierlich gekrümmter Holm und Verfahren zur Herstellung
Longeron incurvé en continu et procédé de fabrication

(30) Priority: 02.04.2013 US 201313855705
(43) Date of publication of application: 08.10.2014
(73) Proprietor: The Boeing Company, Chicago, IL 60606-1596 (US)
(72) Inventor: Johnson, Michael Patterson, Chicago, IL Illinois 60606-2016 (US); Ackermann, James F, Chicago, IL Illinois 60606-2016 (US); Eastland, Christopher C, Chicago, IL Illinois 60606-2016 (US); Daniels, Dyrk L, Chicago, IL Illinois 60606-2016 (US); Burpo, Steven J, Chicago, IL Illinois 60606-2016 (US)
(74) Representative: Boult Wade Tennant

(56) References cited:
- EP-A1- 1 288 124
- EP-A1- 2 671 794
- EP-A1- 2 684 685
- WO-A2-2009/004363
- US-A1- 2008 128 553
- US-A1- 2009 001 218

## Description

### BACKGROUND

### 1) Field of the Disclosure

The disclosure relates generally to structural spars, and more specifically, to continuously curved structural spars in composite airfoils of air vehicles and methods of manufacturing the same.

### 2) Description of Related Art

Composite structures are used in a wide variety of applications, including in the manufacture of aircraft, spacecraft, rotorcraft, watercraft, automobiles, and other vehicles and structures, due to their high strength-to-weight ratios, corrosion resistance, and other favorable properties. In aircraft construction, composites structures are used in increasing quantities to form the wings, tail sections, fuselage, and other components.

Known composite airfoils, such as aircraft wings, may utilize upper and lower outer composite wing skin panels, i.e., "skins", mechanically attached or bonded to an internal frame. The internal frame may typically include reinforcing structures such as spars, ribs, and stringers to improve the strength and stability of the wing skins. The wing skins may be attached to the spars and the spars provide structural integrity for the wings. In addition, many aircraft wings may have fuel tanks inside the wings which may be contained between front and rear spars.

Known structural spars may have one or more discrete or distinct areas along their length where there is an abrupt change in angle, also referred to as a "kink" or bend. Such known spars may be referred to as "kinked spars" and sweep aft with such discrete kinks. Manufacturing a kinked spar may require assembling and joining multiple parts and multiple splices together. The use and assembly of such multiple parts and multiple splices may increase the time, complexity, part count, and manual labor required to manufacture the kinked spar, which may, in turn, increase the overall manufacturing costs.

Moreover, the assembly of such multiple parts and multiple splices for known kinked spars may require the use of additional mechanical fasteners, clamps, or fixtures to join or assist in joining such multiple parts and multiple splices together. However, the installation, use, and/or removal of such additional mechanical fasteners, clamps, or fixtures may increase the time, complexity, part count, and manual labor required to manufacture the kinked spar, which may, in turn, increase the overall manufacturing costs. Further, the installation and use of additional mechanical fasteners, clamps, or fixtures that may not be removed after assembly may add weight to the aircraft, which, in turn, may result in an increased fuel requirement for a given flight profile. This increased fuel requirement may, in turn, result in increased fuel costs. Finally, the use of numerous fasteners, if made of metal and exposed through the outer composite wing skin panels, may result in an increased risk of a lightning strike to the wing.

In addition, the abrupt change in angle of the one or more discrete kinks in the known kinked spars may result in a significant kick load which must be distributed and resolved by the ribs and wing skins at those kinked areas. As used herein the term "kick load" means a load that is induced into a structure as a result of an abrupt change in load path. A kick load may cause increased load to the wing skins which may result in wing buckling. In known kinked spars, the kick load may be reacted by adding strength capability to the wing skins and/or to the ribs to avoid wing buckling. Such added strength capability may include increasing the gauge of parts, modifying a material to a stronger material system, and/or increasing the size of the fasteners that attach the parts. However, such added strength capability may result in increased weight and cost.

Accordingly, there is a need in the art for an improved structural spar and method of manufacturing that provide advantages over known kinked spars, assemblies and methods.

EP 1,288,124 relates to a composite material wing and a method of manufacture thereof wherein a lower skin portion structure is integrally molded by a employing a front spar and a rear spar having rib posts, lower stringers, a lower skin prepreg, and lower rib chord prepregs. EP 2,671,794 relates to a composite material structure and an aircraft wing and fuselage wherein the composite material structure reinforces areas around holes against stress concentrations. EP 2,684,685 relates to a spar which is a carbon-fiber-reinforced plastic structure equipped with both a carbon fiber prepreg and a conduction layer. US 2009/0001218 relates to an integrated structure of a composite material multi-spar torsion box for aircraft.

### SUMMARY

The present invention relates to an airfoil according to claim 1 and a method of manufacturing an aircraft according to claim 8.

This need for an improved structural spar and method of manufacturing is satisfied. As discussed in the below detailed description, embodiments of the improved structural spar and method of manufacturing may provide significant advantages over known kinked spars, assemblies and methods.

In one embodiment of the disclosure, there is provided an airfoil. The airfoil comprises one or more fuel containment regions disposed in the airfoil. The airfoil further comprises one or more continuously curved spars extending from a root end of the airfoil toward a tip end of the airfoil. At least one continuously curved spar comprises a unitary configuration, comprises one or more continuous curves along the continuously curved spar, and either has a portion forming a structural wall of at least one of the one or more fuel containment regions, or, being internal to the one or more fuel containment regions.

In another embodiment of the disclosure, there is provided an aircraft. The aircraft comprises a fuselage. The aircraft further comprises two or more airfoils attached to the fuselage and extending from the fuselage. Each airfoil comprises one or more fuel containment regions disposed in the airfoil. Each airfoil further comprises one or more continuously curved spars extending from a root end of the airfoil toward a tip end of the airfoil. At least one continuously curved spar comprises a unitary configuration, comprises one or more continuous curves along the continuously curved spar, and comprises either having a portion forming a structural wall of at least one of the one or more fuel containment regions, or, being internal to the one or more fuel containment regions. Each airfoil further comprises a plurality of ribs attached substantially perpendicular to and between the one or more continuously curved spars. Each airfoil further comprises upper and lower stiffened panels covering the one or more fuel containment regions, the one or more continuously curved spars, and the plurality of ribs.

In another embodiment of the disclosure, there is provided a method of manufacturing an aircraft. The method comprises the step of forming and curing one or more composite continuously curved spars, at least one continuously curved spar having a unitary configuration and having one or more continuous curves along the continuously curved spar. The method further comprises attaching a first end of each of the one or more continuously curved spars to a fuselage section of an aircraft and extending each of the one or more continuously curved spars from the fuselage section. The method further comprises positioning a portion of one or more of the one or more continuously curved spars to form a structural wall of a fuel containment region. The method further comprises attaching a plurality of ribs substantially perpendicular to and between the one or more continuously curved spars. The method further comprises sandwiching each of the one or more continuously curved spars, the plurality of ribs, and the fuel containment region between upper and lower stiffened panels to form an airfoil of an aircraft.

The features, functions, and advantages that have been discussed can be achieved independently in various embodiments of the disclosure or may be combined in yet other embodiments further details of which can be seen with reference to the following description and drawings.

Further, the disclosure comprises embodiments according to the following clauses:
Clause 1. An aircraft comprising: a fuselage; two or more airfoils attached to and extending from the fuselage, each airfoil comprising: one or more fuel containment regions disposed in the airfoil; one or more continuously curved spars extending from a root end of the airfoil toward a tip end of the airfoil, at least one continuously curved spar comprising: a unitary configuration; one or more continuous curves along the continuously curved spar; and, either having a portion forming a structural wall of at least one of the one or more fuel containment regions, or, being internal to the one or more fuel containment regions; a plurality of ribs attached substantially perpendicular to and between the one or more continuously curved spars; and, upper and lower stiffened panels covering the one or more fuel containment regions, the one or more continuously curved spars, and the plurality of ribs.
Clause 2. The aircraft of clause 1 wherein the one or more continuously curved spars extend in an axial direction comprising one or more of a longitudinal x-axis direction, a lateral y-axis direction, and a vertical z-axis direction.
Clause 3. The aircraft of clause 1 wherein each of the one or more continuously curved spars comprises a unitary composite structure, and the two or more airfoils comprise two or more of composite aircraft wings and composite aircraft horizontal stabilizers.
Clause 4. The aircraft of clause 1 wherein the one or more continuously curved spars have no discrete kinks, resulting in a load distribution across the plurality of ribs and the upper and lower stiffened panels, as compared to a load distribution of existing kinked spars which concentrate load at discrete kinks.

### BRIEF DESCRIPTION OF THE DRAWINGS

The disclosure can be better understood with reference to the following detailed description taken in conjunction with the accompanying drawings which illustrate preferred and exemplary embodiments, but which are not necessarily drawn to scale, wherein:
FIG. 1 is an illustration of a top plan view of an air vehicle having one or more airfoils incorporating one or more embodiments of a continuously curved spar of the disclosure;
FIG. 2 is an illustration of a flow diagram of an aircraft production and service method;
FIG. 3 is an illustration of a block diagram of an aircraft;
FIG. 4A is an illustration of a top sectional view of a known airfoil having kinked spars;
FIG. 4B is an illustration of axial directions of the kinked spars of FIG. 4A;
FIG. 5A is an illustration of a top sectional view of an embodiment of an airfoil of the disclosure showing the continuously curved spars;
FIG. 5B is an illustration of axial directions of the one or more continuously curved spars of FIG. 5A;
FIG. 6A is an illustration of a top sectional view of another embodiment of an airfoil of the disclosure showing the continuously curved spars;
FIG. 6B is an illustration of axial directions of the one or more continuously curved spars of FIG. 6A;
FIG. 7A is an illustration of a right side perspective view of an embodiment of an airfoil of the disclosure showing continuously curved spars;
FIG. 7B is an illustration of an enlarged cross-sectional view taken along lines 7B-7B of FIG. 7A;
FIG. 7C is an illustration of an enlarged view of circle 7C of FIG. 7B; and,
FIG. 8 is an illustration of a flow diagram of an exemplary embodiment of a method of the disclosure.

### DETAILED DESCRIPTION

Disclosed embodiments will now be described more fully hereinafter with reference to the accompanying drawings, in which some, but not all of the disclosed embodiments are shown. Indeed, several different embodiments may be provided and should not be construed as limited to the embodiments set forth herein. Rather, these embodiments are provided so that this disclosure will be thorough and complete and will fully convey the scope of the disclosure to those skilled in the art.

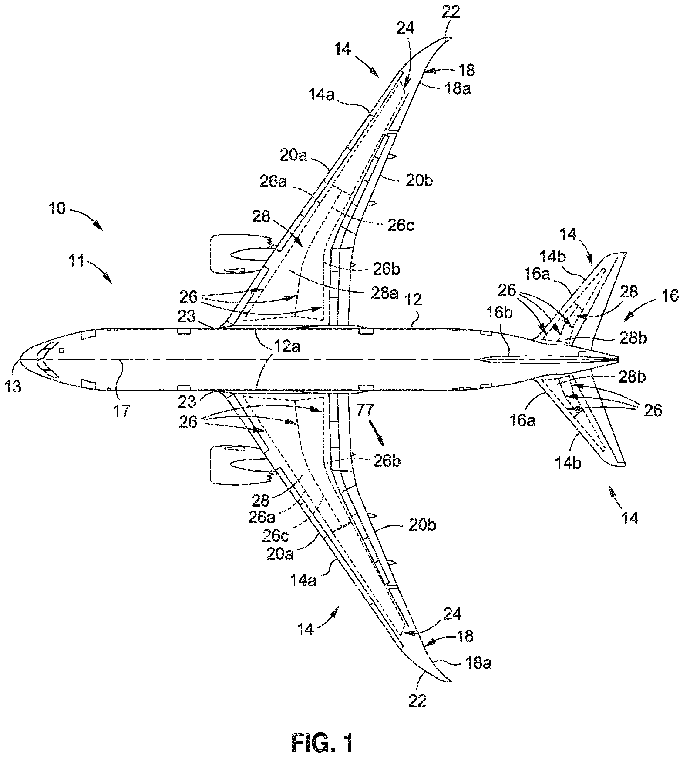

Now referring to the Figures, FIG. 1 is an illustration of a top plan view of an air vehicle 10, such as in the form of aircraft 11, having two or more airfoils 14. Each airfoil 14 may incorporate one or more embodiments of a continuously curved spar 26 of the disclosure. As shown in FIG. 1, the air vehicle 10, such as in the form of aircraft 11, comprises a fuselage 12 having fuselage sections 12a, and further comprises two or more airfoils 14, such as airfoils 14a, for example, in the form of aircraft wings 18, and such as airfoils 14b, for example, in the form of horizontal stabilizers 16a of a tail 16. In addition, to aircraft wings 18 and horizontal stabilizers 16a, the airfoil 14 may comprise a vertical stabilizer, a tail plane, a canard, or another suitable airfoil structure].

As further shown in FIG. 1, each airfoil 14a, such as in the form of aircraft wing 18a, comprises a leading edge 20a, a trailing edge 20b, a tip end 22, a root end 23, an airframe 24, one or more embodiments of the continuously curved spars 26, and one or more fuel containment regions 28. The one or more embodiments of the continuously curved spars 26 (see FIG. 1) may comprise a continuously curved front spar 26a (see FIG. 1), a continuously curved rear spar 26b (see FIG. 1), or a continuously curved intermediate spar 26c (see FIG. 1). The one or more fuel containment regions 28 may comprise a fuel tank 28a (see FIG. 1) or a fuel cell 28b (see FIG. 1). As further shown in FIG. 1, the tail 16 comprises horizontal stabilizers 16a and a vertical stabilizer 16b. As shown in FIG. 1, each horizontal stabilizer 16a may comprise one or more embodiments of the continuously curved spars 26 and one or more fuel containment regions 28.

Although the aircraft 10 shown in FIG. 1 is generally representative of a commercial passenger aircraft having one or more airfoils 14 with one or more embodiments of the continuously curved spars 26, the teachings of the disclosed embodiments may be applied to other passenger aircraft, cargo aircraft, military aircraft, rotorcraft, and other types of aircraft or aerial vehicles, as well as aerospace vehicles, satellites, space launch vehicles, rockets, and other aerospace vehicles, as well as boats and other watercraft, structures such as windmills, or other suitable structures that may use embodiments of the continuously curved spar 26 disclosed herein.

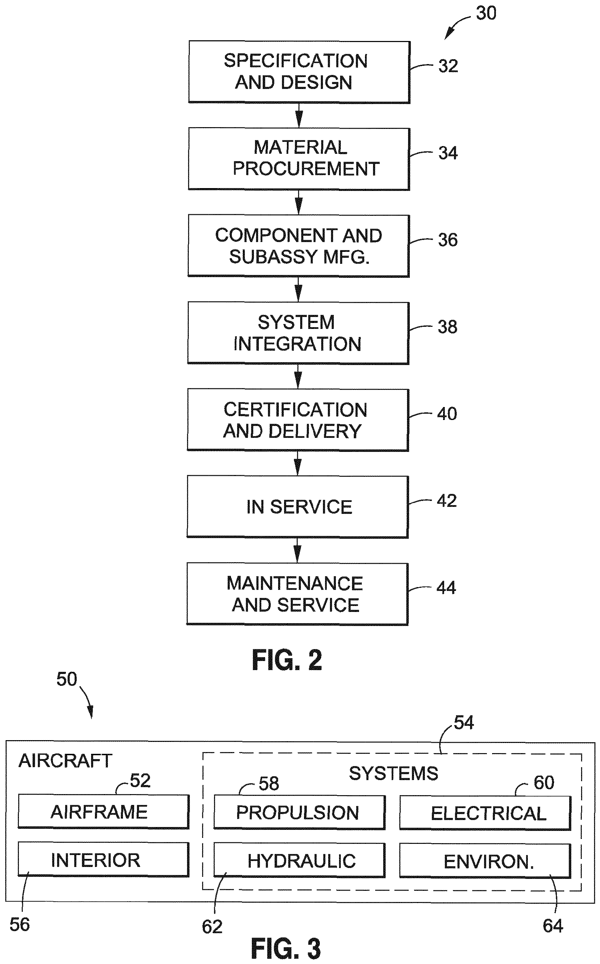

FIG. 2 is an illustration of a flow diagram of an aircraft manufacturing and service method 30. FIG. 3 is an illustration of a block diagram of an aircraft 50. Referring to FIGS. 2-3, embodiments of the disclosure may be described in the context of the aircraft manufacturing and service method 30 as shown in FIG. 2 and the aircraft 50 as shown in FIG. 3. During pre-production, exemplary aircraft manufacturing and service method 30 may include specification and design 32 of the aircraft 50 and material procurement 34. During manufacturing, component and subassembly manufacturing 36 and system integration 38 of the aircraft 50 takes place. Thereafter, the aircraft 50 may go through certification and delivery 40 in order to be placed in service 42. While in service 42 by a customer, the aircraft 50 may be scheduled for routine maintenance and service 44 (which may also include modification, reconfiguration, refurbishment, and other suitable services).

Each of the processes of the aircraft manufacturing and service method 30 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may include an airline, leasing company, military entity, service organization, and other suitable operators.

As shown in FIG. 3, the aircraft 50 produced by the exemplary aircraft manufacturing and service method 30 may include an airframe 52 with a plurality of systems 54 and an interior 56. Examples of high-level systems 54 may include one or more of a propulsion system 58, an electrical system 60, a hydraulic system 62, and an environmental system 64. Any number of other systems may be included. Although an aerospace example is shown, the principles of the invention may be applied to other industries, such as the automotive industry.

Methods and systems embodied herein may be employed during any one or more of the stages of the aircraft manufacturing and service method 30. For example, components or subassemblies corresponding to component and subassembly manufacturing 36 may be fabricated or manufactured in a manner similar to components or subassemblies produced while the aircraft 50 is in service. Also, one or more apparatus embodiments, method embodiments, or a combination thereof, may be utilized during component and subassembly manufacturing 36 and system integration 38, for example, by substantially expediting assembly of or reducing the cost of the aircraft 50. Similarly, one or more of apparatus embodiments, method embodiments, or a combination thereof, may be utilized while the aircraft 50 is in service, for example and without limitation, to maintenance and service 44.

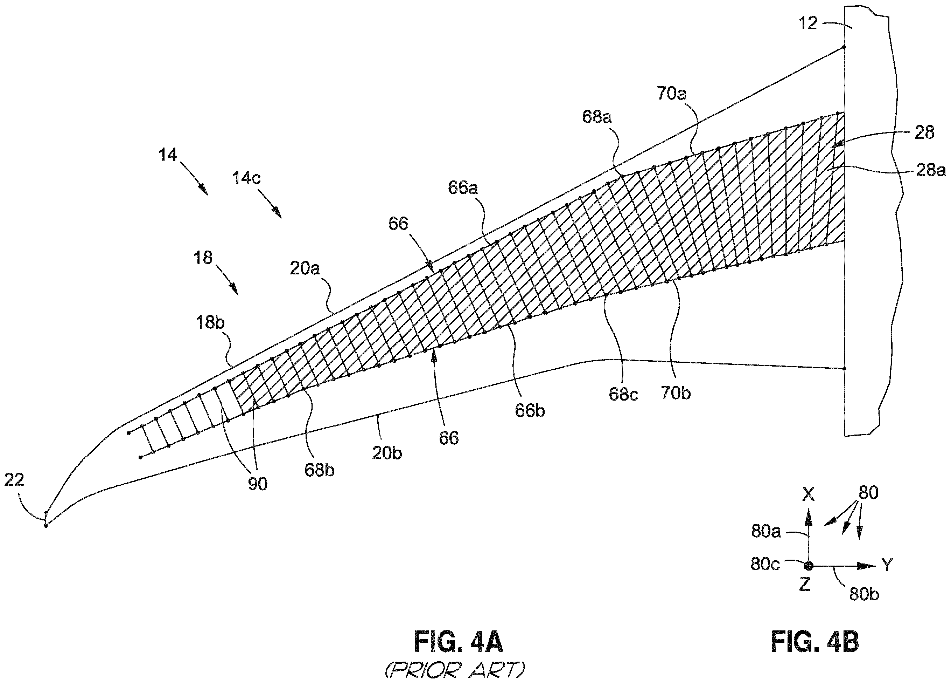

FIG. 4A is an illustration of a top sectional view of an airfoil 14, such as in the form of a known airfoil 14c, having kinked spars 66. As shown in FIG. 4A the known airfoil 14c may be in the form of aircraft wing 18b having kinked spars 66 that extend from the fuselage 12 toward the wing tip 22, having the fuel containment region 28 in the form of fuel tank 28a, and having a plurality of ribs 90 attached perpendicular to and between the kinked spars 66. FIG. 4A shows a kinked front spar 66a having a discrete kink 68a and a kinked spar path 70a. FIG. 4A further shows a kinked rear spar 66b having discrete kinks 68b, 68c and a kinked spar path 70b. As used herein, the term "discrete kink" means a distinct area along the length of the kinked spar 66 (see FIG. 4A) where there is an abrupt change in angle and direction along the spar plane. FIG. 4B is an illustration of axial directions 80 for a set of x, y, and z axes of a three-dimensional coordinate system, relating to the kinked spar path 70a of kinked spar 66a and the kinked spar path 70b of kinked spar 66b of FIG. 4A. The axial directions 80 include a longitudinal x-axis direction 80a, a lateral y-axis direction 80b, and a vertical z-axis direction 80c. A z-axis direction is through the aircraft wing 18b and only the point of the z-axis is shown in FIG. 4B but not the z-axis itself.

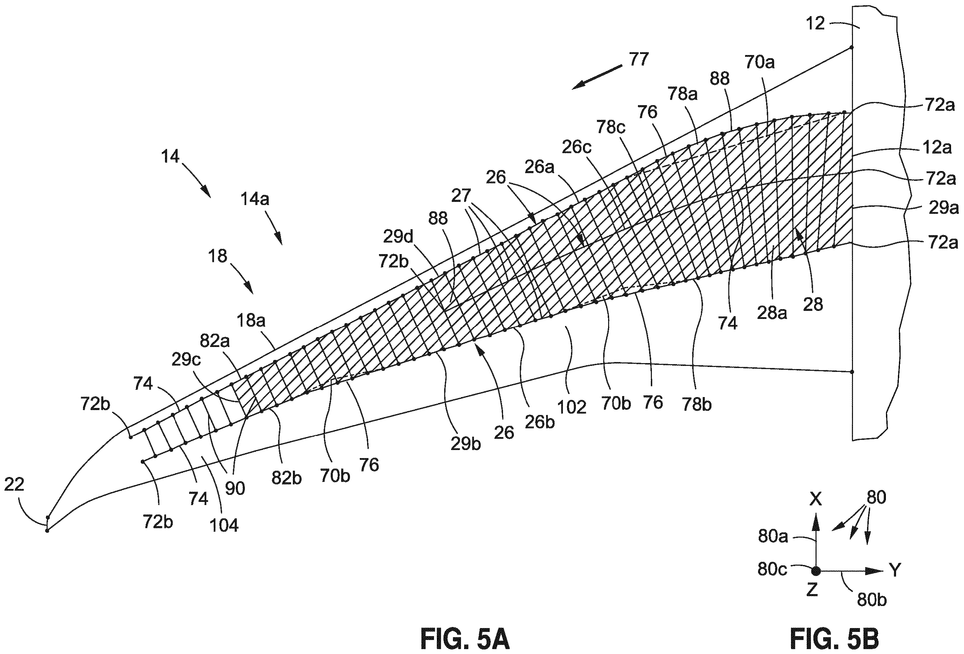

FIG. 5A is an illustration of a top sectional view of an embodiment of an airfoil 14, such as in the form of airfoil 14a (see also FIG. 1) of the disclosure showing the continuously curved spars 26. As further shown in FIG. 5A, the airfoil 14a preferably comprises an aircraft wing 18, such as in the form of aircraft wing 18a. The airfoil 14 (see FIGS. 1, 5A, 6A, 7A) comprises one or more fuel containment regions 28 (see FIGS. 1, 5A, 6A, 7A) disposed in the airfoil 14. The one or more fuel containment regions 28 preferably comprises a fuel tank 28a (see FIGS. 1, 5A), a fuel cell (see FIG. 1), or another suitable fuel containment region 28 or structure. As shown in FIG. 5A, the fuel containment region 28, such as in the form of fuel tank 28a, preferably has fuel containment boundaries 29a, 29b, 29c, 29d that form the perimeter of the fuel containment region 28. Although the fuel containment region 28 shown in FIG. 5A has a four-sided, generally rectangular configuration, the fuel containment region may be formed in other suitable configurations.

As shown in FIG. 5A, the airfoil 14, such as in the form of airfoil 14a, further comprises one or more continuously curved spars 26 (see FIG. 1). As shown in FIG. 5A, each continuously curved spar 26 has a first end 72a, a second end 72b, and an elongated body portion 74 there between. As shown in FIG. 5A, preferably, each of the one or more continuously curved spars 26 comprises one of a continuously curved front spar 26a, a continuously curved rear spar 26b, or a continuously curved intermediate spar 26c. The continuously curved front spar 26a is preferably positioned lengthwise along the leading edge 20a (see FIG. 1) of the airfoil 14a (see FIG. 1). The continuously curved rear spar 26b is preferably positioned lengthwise along the trailing edge 20b (see FIG. 1) of the airfoil 14a (see FIG. 1). The continuously curved intermediate spar 26c is preferably positioned lengthwise between the continuously curved front spar 26a and the continuously curved rear spar 26b. The one or more continuously curved spars 26 preferably provide strength to the airfoil 14 and may carry axial forces and bending moments.

As further shown in FIG. 5A, the first end 72a of each of the one or more continuously curved spars 26 is preferably configured for attachment to the fuselage section 12a of the air vehicle 10 (see FIG. 1), such as aircraft 11 (see FIG. 1). The continuously curved spars 26 (see FIGS. 1, 5A) may be attached to fuselage sections 12a (see FIG. 1) of the fuselage 12 (see FIG. 1) of the air vehicle 10 (see FIG. 1), such as the aircraft 11 (see FIG. 1), and/or may be attached to a corresponding airfoil 14, such as an aircraft wing 18, positioned on the other side of the aircraft 11 through a joint system (not shown). Such joint system may run substantially along a centerline 17 (see FIG. 1) of the fuselage 12 (see FIG. 1) of the aircraft 11 (see FIG. 1). In other embodiments, the continuously curved spars 26 may be attached to other suitable structures of the air vehicle 10, such as aircraft 11.

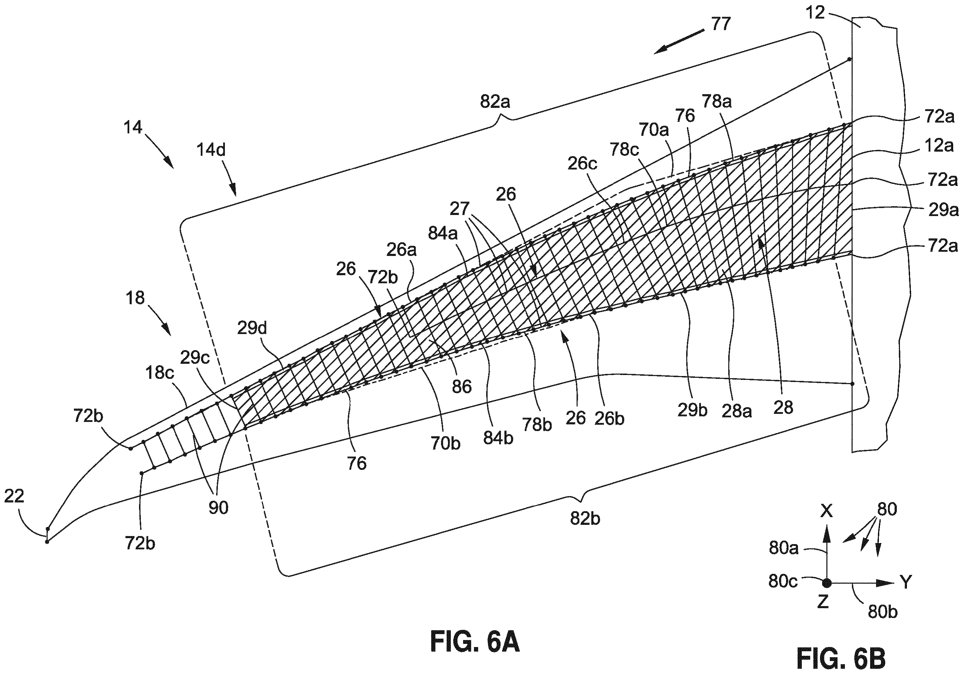

The continuously curved spars 26 (see FIG. 5A) preferably extend from the fuselage 12 (see FIG. 5A) in a lengthwise direction 77 (see FIGS. 1, 5A), from the root end 23 (see FIG. 1) of the airfoil 14a toward the tip end 22 (see FIG. 1) of the airfoil 14a, or such as from an inboard side to an outboard side of the air vehicle 10 (see FIG. 1), such as aircraft 11 (see FIG. 1). As shown in FIG. 5A, the second end 72b of each of the continuously curved spars 26 extends toward the tip end 22, and/or proximate the tip end 22. With the embodiment shown in FIG. 5A, the continuously curved front spar 26a and the continuously curved rear spar 26b are closer to the tip end 22 than the continuously curved intermediate spar 26c, which may have a second end 72b that terminates near an internal portion 86 (see also FIG. 6A) of the fuel containment region 28. However, the second end 72b of the continuously curved intermediate spar 26c may terminate at longer or shorter lengths within the fuel containment region 28.

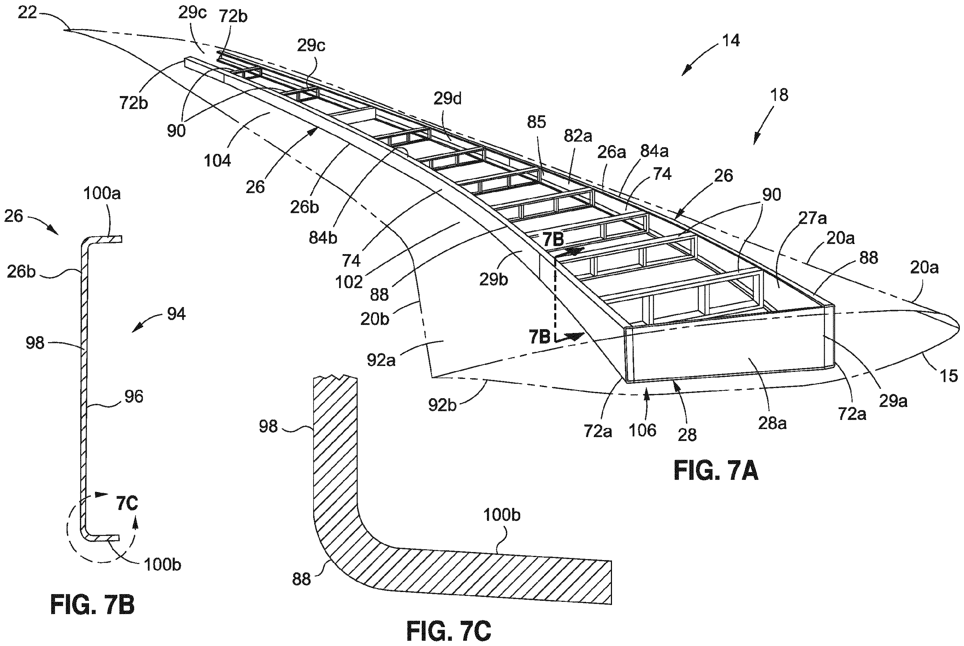

Preferably, as shown in FIG. 5A, the continuously curved front spar 26a and the continuously curved rear spar 26b extend in the lengthwise direction 77 through both a wet section 102 (see also FIG. 7A) of the airfoil 14 containing the fuel containment region 28, and through a dry section 104 (see also FIG. 7A) of the airfoil 14 (see FIG. 7A) not containing the fuel containment region 28. As used herein, "wet section" means a fuel barrier area where fuel is contained, and "dry section" means an area where no fuel is contained.

As shown in FIG. 5A, at least one continuously curved spar 26 further comprises a unitary configuration 88 and one or more continuous curves 76 along the continuously curved spar 26. The one or more continuously curved spars 76 may extend in at least one axial direction 80 (see FIG. 5B). Preferably, the axial direction 80 of the continuous curve 76 comprises one or more of a longitudinal x-axis direction 80a (see FIG. 5B), a lateral y-axis direction 80b (see FIG. 5B), and a vertical z-axis direction 80c (see FIG. 5B). As further shown in FIG. 5A, the continuously curved front spar 26a has a continuous curve 76 and a curved spar path 78a, the continuously curved rear spar 26b has a continuous curve 76 and a curved spar path 78b, and the continuously curved intermediate spar 26c has a continuous curve 76 and a curved spar path 78c.

FIG. 5A is one embodiment of the airfoil 14a with three (3) continuously curved spars 26. As shown in FIG. 5A, the curved spar path 78a of the continuously curved front spar 26a is compared to the kinked spar path 70a (shown in dotted lines) of the kinked front spar 66a (see FIG. 4A), and the curved spar path 78b of the continuously curved rear spar 26b is compared to the kinked spar path 70b (shown in dotted lines) of the kinked front spar 66b (see FIG. 4A). As shown in FIG. 5A, the curved spar paths 78a, 78b form wider curves along fuel containment boundaries 29b, 29d than do kinked spar paths 70a, 70b, and with this embodiment of the airfoil 14a, the volume of the fuel containment region 28, such as in the form of fuel tank 28a, may be increased as compared to the fuel containment region (see FIG. 4A) of the known airfoil 14c with kinked spars 66 shown in FIG. 4A.

The one or more continuously curved spars 26 preferably comprise composite continuously curved spars 27 (see FIGS. 5A, 6A). Each of the one or more continuously curved spars 26 preferably comprises a unitary composite structure 27a (see FIG. 7A).

The different advantageous embodiments recognize and take into account a number of considerations. For example, the different advantageous embodiments recognize and take into account that an airfoil 14 (see FIG. 1), such as in the form of an aircraft wing 18 (see FIG. 1), may comprise one continuously curved spar 26 (see FIG. 1) alone or combined with other spars not having a continuous curve 76 (see FIG. 5A), may contain multiple continuously curved spars 26 (see FIG. 5A), or may contain a spar wing box 106 (see FIG. 7A) having one or more continuously curved spars 26. All of these embodiments are preferably comprised, at least in part, of composite materials.

In one embodiment, one or more of the continuously curved spars 26 (see FIG. 5A) comprise a portion 82a, 82b (see FIGS. 5A, 6A) forming a structural wall 84a, 84b (see FIGS. 6A, 7A) of at least one of the one or more fuel containment regions 28 (see FIGS. 5A, 6A, 7A). For example, as shown in FIG. 5A, portion 82a (see also FIG. 6A) of the continuously curved front spar 26a preferably forms the structural wall 84a (see FIGS. 6A, 7A) of the fuel containment region 28 (see FIGS. 6A, 7A) along fuel containment boundary 29d (see also FIGS. 6A, 7A). Further, as shown in FIG. 5A, portion 82b (see also FIG. 6A) of the continuously curved rear spar 26b preferably forms the structural wall 84b (see FIGS. 6A, 7A) of the fuel containment region 28 (see FIGS. 6A, 7A) along fuel containment boundary 29b (see also FIGS. 6A, 7A). Preferably, the portions 82a, 82b are interior portions 85 (see FIG. 7A) of the continuously curved front spar 26a (see FIG. 5A) and the continuously curved rear spar 26b (see FIG. 5A).

In another embodiment, one or more of the continuously curved spars 26 (see FIGS. 5A, 6A) may be positioned internal to the one or more fuel containment regions 28 (see FIGS. 5A, 6A). As shown in FIG. 5A, the continuously curved intermediate spar 26c is positioned near an internal portion 86 of the fuel containment region 28, such as the fuel tank 28a.

The airfoil 14 (see FIGS. 5A, 6A, 7A) further comprises a plurality of ribs 90 (see FIGS. 5A, 6A, 7A) attached substantially perpendicular to and between the one or more continuously curved spars 26. The plurality of ribs 90 preferably intersect with the continuously curved spars 26. The plurality of ribs 90 may be formed of a composite material, a metal material, or another suitable material. The plurality of ribs 90 preferably stabilize and provide support to the continuously curved spars 26 (see FIG. 5A), and separate the one or more fuel containment regions 28 (see FIG. 5A) within the airfoil 14 (see FIG. 5A).

The airfoil 14 (see FIG. 7A) further comprises upper stiffened panel 92a (see FIG. 7A) and lower stiffened panel 92b (see FIG. 7A). The upper and lower stiffened panels 92a, 92b cover or sandwich the one or more fuel containment regions 28, the one or more continuously curved spars 26, and the plurality of ribs 90 between the upper and lower stiffened panels 92a, 92b. The upper and lower stiffened panels 92a, 92b are preferably formed of a composite material but may also be formed of another suitable material. The plurality of ribs 90 may transfer load among the continuously curved spars 26 and the upper and lower stiffened panels 92a, 92b.

Preferably, the one or more continuously curved spars 26 (see FIGS. 5A, 6A) have no discrete kinks 68a, 68b, 68c (see FIG. 4A) or bends and are continuously curved. As used herein, "continuously curved spar" includes a spar having one or more substantially straight portions connected by one or more continuously curved portions, i.e., continuous curves, and also includes a spar having one continuous curve with a continuous, non-varying and constant radius. As used herein, "continuously curved" and "continuous curve" mean a curve having no kinks, discontinuities, breaks, or angles, and/or where all the curves or curved portions are connected to substantially straight portions tangent to the curves or curved portions. This continuously curved configuration may result in an improved load distribution across the plurality of ribs 90 and the upper and lower stiffened panels 92a, 92b, as compared to a load distribution of existing or known kinked spars 66 (see FIG. 4A) which concentrate load at discrete kinks 68a, 68b, 68c (see FIG. 4A). Further, constant sweep upper and lower stiffened panels 92a, 92b may be lighter in weight, as a unitary continuously curved spar 26 which, instead of sweeping aft by discrete kinks 68a, 68b, 68c (see FIG. 4A), may be swept aft by a continuous large radius, i.e., a radius spar segment having a size of 4000 inches to 5000 inches.

FIG. 5B is an illustration of axial directions 80 for a set of x, y, and z axes of a three-dimensional coordinate system, relating to the continuous curve 76 of the curved spar paths 78a, 78b, 78c of the continuously curved front spar 26a, the continuously curved rear spar 26b, and the continuously curved intermediate spar 26c, respectively, of FIG. 5A. The axial directions 80 include the longitudinal x-axis direction 80a, the lateral y-axis direction 80b, and the vertical z-axis direction 80c. The vertical z-axis direction 80c is through the aircraft wing 18a and only the point of the vertical z-axis direction 80c, but not the z-axis itself, is shown in FIG. 5B. The longitudinal x-axis direction 80a (i.e., roll axis), is essentially an axis extending through the fuselage 12 (see FIG. 1) of the air vehicle 10 (see FIG. 1) from the tail 16 (see FIG. 1) to the nose 13 (see FIG. 1) in the normal direction of flight. The lateral y-axis direction 80b (i.e., transverse axis or pitch axis), is essentially an axis parallel to the aircraft wings 18 (see FIG. 1) of the air vehicle 10 (see FIG. 1). The vertical z-axis direction 80c (i.e., yaw axis), is essentially an axis extending perpendicular to the longitudinal x-axis direction 80a and the lateral y-axis direction 80b.

FIG. 6A is an illustration of a top sectional view of another embodiment of an airfoil 14, such as in the form of airfoil 14d, of the disclosure showing the continuously curved spars 26 forming a fuel containment region 28, such as fuel tank 28a, having a decreased volume, as compared to the fuel containment region 28 with kinked spars 66 FIG. 4A. The airfoil 14d, is preferably in the form of aircraft wing 18, such as, for example, aircraft wing 18c. As shown in FIG. 6A, the airfoil 14d, such as in the form of aircraft wing 18c, comprises one or more fuel containment regions 28, such as fuel tank 28a, disposed in the airfoil 14d, where the fuel containment region 28 has fuel containment boundaries 29a, 29b, 29c, 29d.

As further shown in FIG. 6A, the airfoil 14d, such as in the form of aircraft wing 18c, further comprises one or more continuously curved spars 26, each having a first end 72a and a second end 72b, and comprising one of a continuously curved front spar 26a, a continuously curved rear spar 26b, or a continuously curved intermediate spar 26c. As further shown in FIG. 6A, the continuously curved spars 26 may be attached to fuselage section 12a of the fuselage 12 and extend from the fuselage 12 in a lengthwise direction 77 toward the tip end 22. With the embodiment shown in FIG. 6A, the continuously curved front spar 26a and the continuously curved rear spar 26b are closer to the tip end 22 than the continuously curved intermediate spar 26c, which may have a second end 72b that terminates near internal portion 86 of the fuel containment region 28. Preferably, the continuously curved front spar 26a and the continuously curved rear spar 26b extend in the lengthwise direction 77 through both a wet section 102 (see FIG. 7A) of the airfoil 14 containing the fuel containment region 28, and through a dry section 104 (see FIG. 7A) of the airfoil 14 (see FIG. 7A) not containing the fuel containment region 28.

Alternatively, the continuously curved spars 26 may be attached to a corresponding airfoil 14, such as an aircraft wing 18, positioned on the other side of the aircraft 11 through a joint system (not shown). Such joint system may run substantially along a centerline 17 (see FIG. 1) of the fuselage 12 (see FIG. 1) of the aircraft 11 (see FIG. 1). In other embodiments, the continuously curved spars 26 may be attached to other suitable structures of the air vehicle 10, such as aircraft 11.

As shown in FIG. 6A, at least one continuously curved spar 26 further comprises a unitary configuration 88 (see FIG. 7A) and one or more continuous curves 76 along the continuously curved spar 76. The one or more continuously curved spars 76 may extend in at least one axial direction 80 (see FIG. 6B). Preferably, the axial direction 80 of the continuous curve 76 comprises one or more of a longitudinal x-axis direction 80a (see FIG. 6B), a lateral y-axis direction 80b (see FIG. 6B), and a vertical z-axis direction 80c (see FIG. 6B). As further shown in FIG. 6A, continuously curved front spar 26a has a continuous curve 76 and a curved spar path 78a, continuously curved rear spar 26b has a continuous curve 76 and a curved spar path 78b, and continuously curved intermediate spar 26c has a continuous curve 76 and a curved spar path 78c.

FIG. 6A is another embodiment of the airfoil 14d, such as in the form of aircraft wing 18c, that has three (3) continuously curved spars 26. As shown in FIG. 6A, the curved spar path 78a of the continuously curved front spar 26a is compared to the kinked spar path 70a (shown in dotted lines) of the kinked front spar 66a (see FIG. 4A), and the curved spar path 78b of the continuously curved rear spar 26b is compared to the kinked spar path 70b (shown in dotted lines) of the kinked front spar 66b (see FIG. 4A). As shown in FIG. 6A, the curved spar paths 78a, 78b form narrower curves along fuel containment boundaries 29b, 29d than do kinked spar paths 70a, 70b, and with this embodiment of the airfoil 14d, the volume of the fuel containment region 28, such as in the form of fuel tank 28a, may be decreased as compared to the fuel containment region 28 (see FIG. 4A) of the known airfoil 14c (see FIG. 4A).

The one or more continuously curved spars 26 preferably comprise composite continuously curved spars 27 (see FIG. 6A). Each of the one or more continuously curved spars 26 preferably comprises a unitary composite structure 27a (see FIG. 7A).

In one embodiment, as shown in FIG. 6A, one or more of the continuously curved spars 26 comprise a portion 82a, 82b forming a structural wall 84a, 84b of at least one of the one or more fuel containment regions 28. For example, as shown in FIG. 6A, portion 82a of the continuously curved front spar 26a preferably forms the structural wall 84a of the fuel containment region 28 along fuel containment boundary 29d. Further, as shown in FIG. 6A, portion 82b of the continuously curved rear spar 26b preferably forms the structural wall 84b of the fuel containment region 28 along fuel containment boundary 29b. Preferably, the portions 82a, 82b are interior portions 85 (see FIG. 7A) of the continuously curved front spar 26a (see also FIG. 7A) and the continuously curved rear spar 26b (see also FIG. 7A).

In another embodiment, one or more of the continuously curved spars 26 (see FIGS. 5A, 6A) may be positioned internal to the one or more fuel containment regions 28 (see FIGS. 5A, 6A). As shown in FIG. 5A, the continuously curved intermediate spar 26c is positioned near internal portion 86 of the fuel containment region 28, such as the fuel tank 28a.

As shown in FIG. 6A, the airfoil 14 further comprises a plurality of ribs 90, discussed in detail above, attached substantially perpendicular to and between the one or more continuously curved spars 26. The airfoil 14 (see FIG. 6A) further comprises upper stiffened panel 92a (see FIG. 7A) and lower stiffened panel 92b (see FIG. 7A), discussed in detail above. Preferably, the one or more continuously curved spars 26 (see FIG. 6A) have no discrete kinks 68a, 68b, 68c (see FIG. 4A) or bends and are continuously curved. This may result in an improved load distribution across the plurality of ribs 90 and the upper and lower stiffened panels 92a, 92b, as compared to a load distribution of existing or known kinked spars 66 (see FIG. 4A) which concentrate load at discrete kinks 68a, 68b, 68c (see FIG. 4A).

FIG. 6B is an illustration of axial directions 80 for a set of x, y, and z axes of a three-dimensional coordinate system, relating to the continuous curve 76 of the curved spar paths 78a, 78b, 78c of the continuously curved front spar 26a, the continuously curved rear spar 26b and the continuously curved intermediate spar 26c, respectively, of FIG. 6A. The axial directions 80 include the longitudinal x-axis direction 80a, the lateral y-axis direction 80b, and the vertical z-axis direction 80c. The vertical z-axis direction 80c is through the aircraft wing 18a and only the point of the vertical z-axis direction 80c, but not the z-axis itself, is shown in FIG. 6B.

FIG. 7A is an illustration of a right side perspective view of an embodiment of an airfoil 14, such as in the form of aircraft wing 18, of the disclosure showing the continuously curved spars 26 forming a spar wing box 106 with a fuel containment region 28, such as fuel tank 28a. FIG. 7A shows an airfoil cross-section 15 of the airfoil 14, as well as the leading edge 20a, the trailing edge 20b, and the tip end 22 of the airfoil 14. As shown in FIG. 7A, the airfoil 14, such as in the form of aircraft wing 18, comprises one or more fuel containment regions 28, such as fuel tank 28a, disposed in the airfoil 14, where the fuel containment region 28 has fuel containment boundaries 29a, 29b, 29c, 29d.

As further shown in FIG. 7A, the airfoil 14 comprises two continuously curved spars 26 in the form of continuously curved front spar 26a and continuously curved rear spar 26b, each having a first end 72a and a second end 72b. As further shown in FIG. 7A, preferably, the continuously curved front spar 26a and the continuously curved rear spar 26b extend in the lengthwise direction 77 (see FIG. 1) through both the wet section 102 of the airfoil 14 containing the fuel containment region 28, and through the dry section 104 of the airfoil 14 not containing the fuel containment region 28. Alternatively, the continuously curved spars 26 may be attached to a corresponding airfoil 14, such as an aircraft wing 18, positioned on the other side of the aircraft 11 through a joint system (not shown). Such joint system may run substantially along a centerline 17 (see FIG. 1) of the fuselage 12 (see FIG. 1) of the aircraft 11 (see FIG. 1). In other embodiments, the continuously curved spars 26 may be attached to other suitable structures of the air vehicle 10, such as aircraft 11.

As shown in FIG. 7A, at least one continuously curved spar 26 comprises a unitary configuration 88. The one or more continuously curved spars 26 preferably comprise composite continuously curved spars 27 (see FIG. 5A). Each of the one or more continuously curved spars 26 preferably comprises a unitary composite structure 27a (see FIG. 7A). At least one continuously curved spar 26 further comprises one or more continuous curves 76 (see FIGS. 5A, 6A) along the continuously curved spar 26. The one or more continuously curved spars 26 may extend in at least one axial direction 80 (see FIGS. 5B, 6B). Preferably, the axial direction 80 of the continuous curve 76 comprises one or more of a longitudinal x-axis direction 80a (see FIGS. 5B, 6B), a lateral y-axis direction 80b (see FIGS. 5B, 6B), and a vertical z-axis direction 80c (see FIGS. 5B, 6B).

The continuously curved spars 26 (see FIG. 7A) each comprise a portion 82a (see FIG. 7A), 82b (see FIG. 6A) forming structural wall 84a, 84b (see FIG. 7A) of at least one of the one or more fuel containment regions 28. For example, as shown in FIG. 7A, portion 82a of the continuously curved front spar 26a preferably forms the structural wall 84a of the fuel containment region 28 along fuel containment boundary 29d. Preferably, the portion 82a is an interior portion 85 (see FIG. 7A) of the continuously curved front spar 26a (see also FIG. 7A). Further, portion 82b (see FIG. 6A) of the continuously curved rear spar 26b (see FIG. 7A) preferably forms the structural wall 84b (see FIG. 7A) of the fuel containment region 28 (see FIG. 7A) along fuel containment boundary 29b (see FIG. 7A). Preferably, the portion 82b (see FIG. 6A) is an interior portion 85 (not shown) of the continuously curved rear spar 26b (see FIG. 7A).

As shown in FIG. 7A, the airfoil 14, such as in the form of aircraft wing 18, having spar wing box 106, comprises a plurality of ribs 90 attached substantially perpendicular to and between the one or more continuously curved spars 26. As shown in FIG. 7A, the airfoil 14 further comprises upper stiffened panel 92a and lower stiffened panel 92b sandwiching the spar wing box 106. The upper and lower stiffened panels 92a, 92b cover the one or more fuel containment regions 28, the one or more continuously curved spars 26, and the plurality of ribs 90. Preferably, the one or more continuously curved spars 26 (see FIG. 7A) have no discrete kinks 68a, 68b, 68c (see FIG. 4A) or bends and are continuously curved. This may result in an improved load distribution across the plurality of ribs 90 and the upper and lower stiffened panels 92a, 92b, as compared to a load distribution of existing or known kinked spars 66 (see FIG. 4A) which concentrate load at discrete kinks 68a, 68b, 68c (see FIG. 4A).

FIG. 7B is an illustration of an enlarged cross-sectional view taken along lines 7B-7B of FIG. 7A. As shown in FIG. 7B, the one or more continuously curved spars 26 may comprise a C-channel spar 94 having a C-shaped cross-section 96. As shown in FIG. 7B, the C-channel spar 94 comprises a web portion 98 disposed between an upper web attachment 100a and a lower web attachment 100b. The upper web attachment 100a is configured to attach or join to the upper stiffened panel 92a (see FIG. 7A), and the lower web attachment 100b is configured to attach or join to the lower stiffened panel 92b (see FIG. 7A). The C-shaped cross section 96 may vary along the length of the continuously curved spar 26 (see FIG. 7B), such as in the form of continuously curved rear spar 26b (see FIG. 7B).

FIG. 7C is an illustration of an enlarged view of circle 7C of FIG. 7B. FIG. 7C partially shows the web portion 98 forming into the lower web attachment 100b. FIG. 7C shows that the C-channel spar 94 (see FIG. 7B) has a unitary configuration 88 through the entire cross-section.

In another embodiment of the disclosure, there is provided an aircraft 11 (see FIG. 1). The aircraft 11 (see FIG. 1) comprises a fuselage 12 (see FIG. 1). As shown in FIG. 1, the aircraft 11 further comprises two or more airfoils 14, such as in the form of airfoils 14a and/or airfoils 14b, attached to the fuselage 12 and extending in a lengthwise direction 77 (see FIG. 1) from the fuselage 12. As shown in FIG. 1, each airfoil 14 comprises one or more fuel containment regions 28 disposed in the airfoil 14. As further shown in FIG. 1, each airfoil 14 further comprises one or more continuously curved spars 26 extending in the lengthwise direction 77 from a root end 23 of the airfoil 14 toward a tip end 22 of the airfoil 14. At least one continuously curved spar 26 (see FIGS. 1, 7A) comprises a unitary configuration 88 (see FIG. 7A) and one or more continuous curves 76 (see FIG. 5A) along the continuously curved spar 26. The one or more continuously curved spars 26 may extend in at least one axial direction 80 (see FIG. 5B). The axial direction 80 comprises one or more of a longitudinal x-axis direction 80a (see FIG. 5B), a lateral y-axis direction 80b (see FIG. 5B), and a vertical z-axis direction 80c (see FIG. 5B).

Each continuously curved spar 26 (see FIG. 6A) further comprises either having a portion 82a, 82b (see FIG. 6A) forming a structural wall 84a, 84b (see FIG. 6A) of at least one of the one or more fuel containment regions 28 (see FIG. 6A), or being internal to the one or more fuel containment regions 28 (see FIG. 6A). Each airfoil 14 (see FIGS. 5A, 6A, 7A) further comprises a plurality of ribs 90 (see FIGS. 5A, 6A, 7A) attached substantially perpendicular to and between the one or more continuously curved spars 26 (see FIGS. 5A, 6A, 7A). Each airfoil 14 further comprises upper and lower stiffened panels 92a, 92b (see FIG. 7A) covering the one or more fuel containment regions 28 (see FIG. 7A), the one or more continuously curved spars 26 (see FIG. 7A), and the plurality of ribs 90 (see FIG. 7A).

The one or more continuously curved spars 26 (see FIG. 7A) comprises a unitary composite structure 27a (see FIG. 7A), and the airfoils 14 (see FIG. 1) comprise two or more of aircraft wings 18, preferably composite aircraft wings, and horizontal stabilizers 16a (see FIG. 1), preferably composite aircraft horizontal stabilizers. The one or more continuously curved spars 26 have no discrete kinks 68a, 68b, 68c (see FIG. 4A), resulting in an improved load distribution across the plurality of ribs 90 (see FIG. 7A) and the upper and lower stiffened panels 92a, 92b (see FIG. 7A), as compared to a load distribution of known kinked spars 66 (see FIG. 4A) which concentrate load at discrete kinks 68a, 68b, 68c (see FIG. 4A).

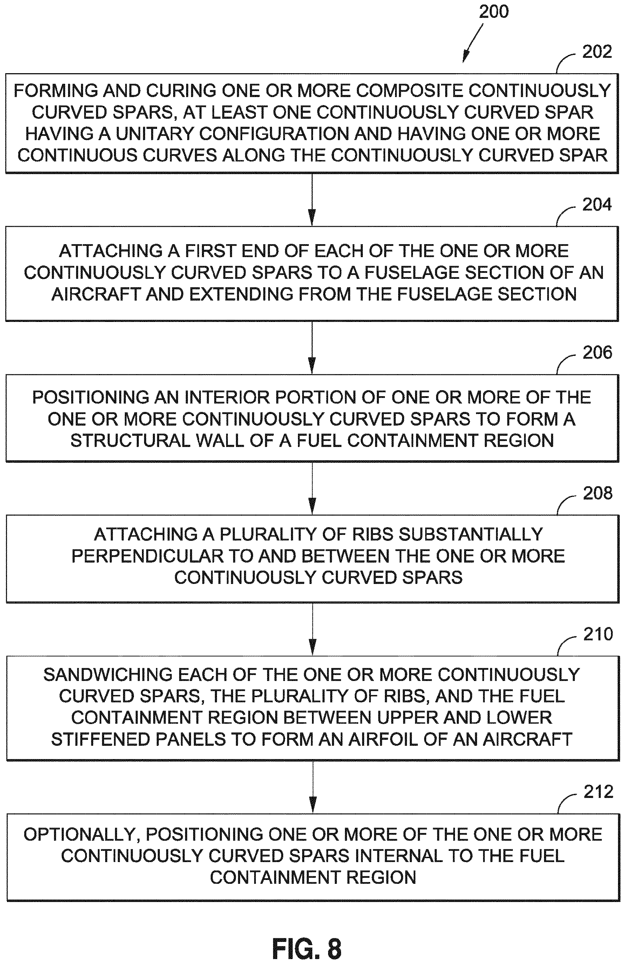

In another embodiment of the disclosure, there is provided a method 200 (see FIG. 8) of manufacturing an aircraft 11 (see FIG. 1). FIG. 8 is an illustration of a flow diagram of an exemplary embodiment of the method 200 of the disclosure. As shown in FIG. 8, the method 200 comprises step 202 of forming and curing one or more continuously curved spars 26 (see FIGS. 5A, 6A, 7A), preferably in the form of composite continuously curved spars 27 (see FIGS. 5A, 6A). At least one continuously curved spar 26 (see FIG. 5A), such as in the form of composite continuously curved spar 27 (see FIG. 5A), has a unitary configuration 88 (see FIG. 7A) and has one or more continuous curves along the continuously curved spar 26 (see FIG. 5A). The one or more continuously curved spars, such as in the form of composite continuously curved spar 27 (see FIG. 5A), may extend in at least one axial direction 80 (see FIG. 5B). The forming step 202 preferably comprises forming and curing one or more of the continuously curved spars 26 (see FIG. 5A), such as in the form of composite continuously curved spars 27 (see FIG. 5A), with the one or more continuous curves 76 (see FIG. 5A) along the composite continuously curved spar 27. The one or more continuously curved spars 26 (see FIG. 5A), such as in the form of composite continuously curved spars 27 (see FIG. 5A), may extend in one or more of a longitudinal x-axis direction 80a (see FIG. 5B), a lateral y-axis direction 80b (see FIG. 5B), and a vertical z-axis direction 80c (see FIG. 5B). The forming step 202 preferably comprises forming and curing one or more continuously curved spars 26 (see FIG. 5A), such as in the form of composite continuously curved spars 27 (see FIG. 5A), having no discrete kinks 68a, 68b, 68c (see FIG. 4A) as is seen with known kinked spars 66 (see FIG. 4A).

As shown in FIG. 8, the method 200 further comprises step 204 of attaching a first end 72b (see FIG. 5A) of each of the one or more continuously curved spars 26 (see FIG. 5A), such as in the form of composite continuously curved spars 27 (see FIG. 5A), to a fuselage section 12a (see FIGS. 1, 5A) of an aircraft 11 (see FIG. 1) and extending each of the one or more continuously curved spars 26, such as in the form of composite continuously curved spars 27 (see FIG. 5A), from the fuselage section12a (see FIGS. 1, 5A), and preferably in a lengthwise direction 77 (see FIG. 1).

As shown in FIG. 8, the method 200 further comprises step 206 of positioning a portion 82a, 82b (see FIGS. 5A, 6A), such as an interior portion 85, of one or more of the one or more continuously curved spars 26, such as in the form of composite continuously curved spars 27 (see FIG. 5A), for example, continuously curved front spar 26a (see FIG. 5A) and continuously curved rear spar 26b (see FIG. 5A), to form a structural wall 84a, 84b (see FIGS. 6A, 7A) of the fuel containment region 28 (see FIGS. 6A, 7A). Preferably, the portion 82a, 82b is an interior portion 85 (see FIG. 7A) of the continuously curved front spar 26a (see FIG. 5A) and the continuously curved rear spar 26b (see FIG. 5A). The positioning step 206 further comprises positioning the portion 82a, 82b (see FIGS. 5A, 6A) of the one or more continuously curved spars 26, such as in the form of composite continuously curved spars 27 (see FIG. 5A), to form the structural wall 84a, 84b (see FIGS. 6A, 7A) of a fuel tank 28a (see FIG. 1) or a fuel cell 28b (see FIG. 1).

As shown in FIG. 8, the method 200 further comprises step 208 of attaching a plurality of ribs 90 (see FIGS. 5A, 6A, 7A) substantially perpendicular to and between the one or more continuously curved spars 26 (see FIGS. 5A, 6A, 7A), such as in the form of composite continuously curved spars 27 (see FIG. 5A). As shown in FIG. 8, the method 200 further comprises step 210 of sandwiching each of the one or more continuously curved spars 26 (see FIG. 7A), such as in the form of composite continuously curved spars 27 (see FIG. 5A), the plurality of ribs 90 (see FIG. 7A), and the fuel containment region 28 (see FIG. 7A) between upper stiffened panel 92a (see FIG. 7A) and lower stiffened panel 92b (see FIG. 7A) to form an airfoil 14 (see FIG. 7A) of an aircraft 11 (see FIG. 1).

As shown in FIG. 8, the method 200 may further comprise optional step 212 of positioning the one or more continuously curved spars 26, such as in the form of composite continuously curved spars 27 (see FIG. 5A), for example, continuously curved intermediate spar 26c (see FIGS. 5A, 6A) internal to the fuel containment region 28 (see FIGS. 5A, 6A). The method 200 may further comprise forming a wet section 102 (see FIG. 7A) of the airfoil 14 (see FIG. 7A) and forming a dry section 104 (see FIG. 7A) of the airfoil 14 (see FIG. 7A), wherein the one or more continuously curved spars 26 (see FIG. 7A), such as in the form of composite continuously curved spars 27 (see FIG. 5A), extend through both the wet section 102 of the airfoil 14 and through the dry section 104 of the airfoil 14.

As will be appreciated by those of skill in the art, incorporating one or more of the novel continuously curved spars 26 (see FIG. 5A), such as in the form of composite continuously curved spars 27 (see FIG. 5A), into an airfoil 14 (see FIG. 1), such as aircraft wing 18 (see FIG. 1), and in turn, into an air vehicle 10 (see FIG. 1), such as an aircraft 11 (see FIG. 1), results in a number of substantial benefits. Disclosed embodiments of the continuously curved spars 26, airfoil 14 containing one or more of the continuously curved spars 26, and method 200 (see FIG. 8) of manufacturing an aircraft 11 (see FIG. 1) with two or more airfoils 14 containing one or more of the continuously curved spars 26 provide a design that eliminates the need for discrete kinks 68a, 68b, 68c (see FIG. 4A), such as in kinked spars 66 (see FIG. 4A), which may reduce the time, complexity, part count, and manual labor required to manufacture the continuously curved spars 26, and the aircraft 11 and airfoil 14 containing the one or more of the continuously curved spars 26, and which may, in turn, reduce the overall manufacturing costs, as compared to manufacturing costs for manufacturing kinked spars 66 (see FIG. 4A) and structures containing such kinked spars 66.

Moreover, disclosed embodiments of the continuously curved spars 26, airfoil 14 containing one or more of the continuously curved spars 26, and method 200 (see FIG. 8) of manufacturing an aircraft 11 (see FIG. 1) with two or more airfoils 14 containing one or more of the continuously curved spars 26 provide for continuously curved spars 26 having a unitary configuration 88 (see FIG. 7A) and that may be manufactured in a unitary structure, thus eliminating or minimizing the use of additional mechanical fasteners, clamps, or fixtures to join or assist in joining any multiple parts together, which may reduce the time, complexity, part count, and manual labor required with the use of such additional fasteners, clamps, or fixtures, and which may, in turn, reduce the overall manufacturing costs. Further, by eliminating or minimizing the installation and use of such additional mechanical fasteners, clamps, or fixtures including those that may not be removed after assembly, the weight of the wings, and in turn, the overall weight of the aircraft, may be decreased, which may, in turn, result in a decreased fuel requirement for a given flight profile. This decreased fuel requirement may, in turn, result in decreased fuel costs. In addition, by eliminating or minimizing the installation and use of additional mechanical fasteners, such as metal fasteners, that may be exposed through the upper and lower stiffened panels 92a, 92b (see FIG. 7A), the risk of a lightning strike to the wing of the aircraft 11 (see FIG. 1) may be decreased. A single piece design with a unitary configuration 88 (see FIG. 7A), if manufactured efficiently, may thus result in a lower wing weight and increased cost savings.

Further, disclosed embodiments of the continuously curved spars 26, airfoil 14 containing one or more of the continuously curved spars 26, and method 200 (see FIG. 8) of manufacturing an aircraft 11 (see FIG. 1) with two or more airfoils 14 containing one or more of the continuously curved spars 26 provide a continuous curve design where a portion of the continuously curved spar 26 forms a portion or wall of the fuel containment region 28 (see FIG. 5A), and where the volume of the fuel containment region 28 may be increased, which may result in an increased fuel capacity for the aircraft 11 and decreased manufacturing costs. Further, constant sweep upper and lower stiffened panels 92a, 92b may be lighter in weight, as a unitary continuously curved spar 26 which, instead of sweeping aft by discrete kinks 68a, 68b, 68c (see FIG. 4A), may be swept aft by a continuous large radius, i.e., a radius spar segment having a size of 4000 inches to 5000 inches.

In addition, disclosed embodiments of the continuously curved spars 26, airfoil 14 containing one or more of the continuously curved spars 26, and method 200 (see FIG. 8) of manufacturing an aircraft 11 (see FIG. 1) with two or more airfoils 14 containing one or more of the continuously curved spars 26 provide a continuously curved spar 26 having no discrete kinks 68a, 68b, 68c and which may reduce kick load by more evenly distributing the kick load across multiple ribs 90 (see FIG. 5A) and more of the upper and lower stiffened panels 92a, 92b (see FIG. 7A). This may result in a lighter weight and less expensive aircraft wing 18 (see FIG. 1).

Many modifications and other embodiments of the disclosure will come to mind to one skilled in the art to which this disclosure pertains having the benefit of the teachings presented in the foregoing descriptions and the associated drawings. The embodiments described herein are meant to be illustrative and are not intended to be limiting or exhaustive. Although specific terms are employed herein, they are used in a generic and descriptive sense only and not for purposes of limitation.

## Claims

1. An airfoil (14) comprising:
one or more fuel containment regions (28) disposed in the airfoil (14); and,
one or more continuously curved spars (26) extending from a root end (23) of the airfoil (14) toward a tip end (22) of the airfoil (14), wherein each of the continuously curved spars comprises:
a first end (72a), a second end (72b) and an elongate body portion (74) there between; a unitary configuration; and one or more continuous curves along the continuously curved spar; and
wherein the one or more continuously curved spars (26) comprise:
a continuously curved front spar (26a);
a continuously curved rear spar (26b);
and **characterized in that**, the one or more continuously curved spars (26)
further comprise:
a continuously curved intermediate spar (26c); wherein:
the second end of the continuously curved intermediate spar terminates near an internal portion (86) of the fuel containment region (28) such that the continuously curved front spar (26a) and the continuously curved rear spar (26b) extend closer to the tip (22) than the continuously curved intermediate spar.

2. The airfoil (14) of claim 1 wherein the one or more fuel containment regions comprises a fuel tank (28a) or a fuel cell (28b).

3. The airfoil (14) of claim 1 wherein the continuously curved front spar (26a) and the continuously curved rear spar (26b) extend in a lengthwise direction through both a wet section (102) of the airfoil and a dry section (104) of the airfoil.

4. The airfoil (14) of any preceding claim wherein each of the one or more continuously curved spars (26) comprises a unitary composite structure.

5. The airfoil (14) of any preceding claim wherein the first end (72a) of each of the one or more continuously curved spars (26) is configured for attachment to a fuselage (12a) section of an air vehicle (10).

6. The airfoil (14) of any preceding claim further comprising a plurality of ribs (90) attached substantially perpendicular to and between the continuously curved spars (26), and further comprising an upper stiffened panel (92a) and a lower stiffened panel (92b) covering the one or more fuel containment regions (28), the one or more continuously curved spars (26), and the plurality of ribs (90).

7. The airfoil of claim 8 wherein the one or more continuously curved spars (26) have no discrete kinks, resulting in a load distribution across the plurality of ribs (90) and across the upper (92a) and lower (92b) stiffened panels, as compared to a load distribution of existing kinked spars which concentrate load at discrete kinks.

8. A method of manufacturing an aircraft (11), the method comprising the steps of:
forming and curing one or more composite continuously curved spars (26) comprising:
a continuously curved front spar (26a); and
a continuously curved rear spar (26b); wherein
each of the at least one continuously curved spars (26) has:
a first end (72a), a second end (72b) and an elongate body portion (74) there between;
a unitary configuration; and
one or more continuous curves along the continuously curved spar;
attaching the first end (72a) of each of the one or more continuously curved spars (26) to a fuselage section (12a) of an aircraft (11) and extending each of the one or more continuously curved spars from the fuselage (12a) section;
attaching a plurality of ribs (90) substantially perpendicular to and between the one or more continuously curved spars (26); and,
sandwiching each of the one or more continuously curved spars (26), the plurality of ribs (90), and a fuel containment region (28) between upper and lower stiffened panels to form an airfoil (14) of the aircraft:
**characterized in that** the one or more continuously curved spars (26) further comprise:
a continuously curved intermediate spar (26c);
and **in that**, the method further comprises:
positioning an interior portion of one or more of the one or more continuously curved spars (26) to form a structural wall of the fuel containment region (28); and
wherein the extending each of the one or more continuously curved spars (26) involves extending the continuously curved spars (26) such that the second end of the continuously curved intermediate spar (26c) terminates near an internal portion (86) of the fuel containment region (28) and the continuously curved front spar (26a) and the continuously curved rear spar (26b) extend closer to a tip (22) of the airfoil (14) than the continuously curved intermediate spar (26c).

9. The method of claim 8 wherein the forming step comprises forming and curing one or more composite continuously curved spars having no discrete kinks.

10. The method of claim 8 or claim 9 further comprising forming a wet section (102) of the airfoil (14) and forming a dry section (104) of the airfoil (14), wherein the one or more continuously curved spars (26) extend through both the wet section (102) of the airfoil (14) and the dry section (104) of the airfoil (14).

## Patentansprüche

1. Tragfläche (14), die aufweist:
einen oder mehrere Treibstoffaufnahmebereiche (28), die in der Tragfläche (14) angeordnet sind; und
einen oder mehrere kontinuierlich gekrümmte Holme (26), die sich von einem Wurzelende (23) der Tragfläche (14) zu einem Spitzenende (22) der Tragfläche (14) erstrecken, wobei jeder der kontinuierlich gekrümmten Holme (26) aufweist:
ein erstes Ende (72a), ein zweites Ende (72b) und einen dazwischen liegenden länglichen Körperbereich (74), einen einheitlichen Aufbau und eine oder mehrere kontinuierliche Krümmungen entlang des kontinuierlich gekrümmten Holms; und
wobei der eine oder die mehreren kontinuierlich gekrümmten Holme (26) aufweisen:
einen kontinuierlich gekrümmten Vorderholm (26a);
einen kontinuierlich gekrümmten Hinterholm (26b);
und **dadurch gekennzeichnet ist, dass** der eine oder die mehreren kontinuierlich gekrümmten Holme (26) ferner aufweisen:
einen kontinuierlich gekrümmten Zwischenholm (26c);
wobei das zweite Ende des kontinuierlich gekrümmten Zwischenholms so in der Nähe eines Innenteils (86) des Treibstoffaufnahmebereiches (28) endet, dass der kontinuierlich gekrümmte Vorderholm (26a) und der kontinuierlich gekrümmte Hinterholm (26b) näher an die Spitze (22) heranreichen als der kontinuierlich gekrümmte Zwischenholm.

2. Tragfläche (14) nach Anspruch 1, wobei der eine oder die mehreren Treibstoffaufnahmebereiche einen Treibstofftank (28a) oder eine Treibstoffzelle (28b) umfassen.

3. Tragfläche (14) nach Anspruch 1, wobei sich der kontinuierlich gekrümmte Vorderholm (26a) und der kontinuierlich gekrümmte Hinterholm (26b) in Längsrichtung sowohl durch einen Nassbereich (102) der Tragfläche als auch durch einen Trockenbereich (104) der Tragfläche erstrecken.

4. Tragfläche (14) nach einem der vorhergehenden Ansprüche, wobei jeder des einen oder der mehreren kontinuierlich gekrümmten Holme (26) eine einheitliche Verbundstruktur aufweist.

5. Tragfläche (14) nach einem der vorhergehenden Ansprüche, wobei das erste Ende (72a) von jedem des einen oder der mehreren kontinuierlich gekrümmten Holme (26) zum Anbringen an einen Rumpfabschnitt (12a) eines Luftfahrzeugs (10) ausgebildet ist.

6. Tragfläche (14) nach einem der vorhergehenden Ansprüche, die ferner mehrere Rippen (90) aufweist, die in etwa senkrecht zu den kontinuierlich gekrümmten Holmen (26) und zwischen diesen angebracht sind, und die ferner eine obere versteifte Beplankung (92a) und eine untere versteifte Beplankung (92b) aufweist, die den einen oder die mehreren Treibstoffaufnahmebereiche (28), den einen oder die mehreren kontinuierlich gekrümmten Holme (26) und die mehreren Rippen (90) umkleiden.

7. Tragfläche (14) nach Anspruch 8, wobei von dem einen oder den mehreren kontinuierlich gekrümmten Holmen (26) keiner eine diskontinuierliche Knickstellen aufweist, wodurch im Vergleich mit einer Lastverteilung an bestehenden geknickten Holmen, bei denen sich die Last an den diskontinuierlichen Knickstellen konzentriert, eine Verteilung der Last über die mehreren Rippen (90) und über die obere (92a) und untere (92b) versteifte Beplankung erreicht wird.

8. Verfahren zur Herstellung eines Luftfahrzeugs (11), wobei das Verfahren Schritte aufweist zum:
Ausbilden und Härten eines oder mehrerer kontinuierlich gekrümmter Holme (26), die
einen kontinuierlich gekrümmten Vorderholm (26a) und
einen kontinuierlich gekrümmten Hinterholm (26b) umfassen;
wobei
jeder der zumindest wenigstens einen kontinuierlich gekrümmten Holme (26) folgendes aufweist:
ein erstes Ende (72a), ein zweites Ende (72b) und einen dazwischen liegenden länglichen Körperbereich (74);
einen einheitlichen Aufbau; und
eine oder mehrere kontinuierliche Krümmungen entlang des kontinuierlich gekrümmten Holms;
Anbringen des ersten Endes (72a) vom jedem des einen oder der mehreren kontinuierlich gekrümmten Holme (26) an einem Rumpfabschnitt (12a) eines Luftfahrzeugs (11) und Ausrichten eines jeden des einen oder der mehreren kontinuierlich gekrümmten Holme weg von dem Rumpfabschnitt (12a);
Anbringen mehrerer Rippen (90) in etwa senkrecht zu und zwischen dem einen oder den mehreren kontinuierlich gekrümmten Holmen (26); und
Einschließen eines jeden des einen oder der mehreren kontinuierlich gekrümmten Holme (26), der mehreren Rippen (90) und
eines Treibstoffaufnahmebereichs (28) zwischen einer oberen und unteren versteiften Beplankung zur Ausbildung einer Tragfläche des Luftfahrzeugs;
**dadurch gekennzeichnet, dass** der eine oder die mehreren kontinuierlich gekrümmten Holme (26) ferner aufweisen:
einen kontinuierlich gekrümmten Zwischenholm (26c) und dadurch, dass das Verfahren ferner aufweist:
Positionieren eines Innenteils des einen oder der mehreren kontinuierlich gekrümmten Holme (26) zur Ausbildung einer tragenden Wand des Treibstoffaufnahmebereichs (28); und
wobei das Ausrichten eines jeden des einen oder der mehreren kontinuierlich gekrümmten Holme (26) ein Ausrichten der kontinuierlich gekrümmten Holme (26) so umfasst, dass das zweite Ende des kontinuierlich gekrümmten Zwischenholms (26c) in der Nähe eines Innenteils (86) des Treibstoffaufnahmebereichs (28) endet und der kontinuierlich gekrümmte Vorderholm (26a) und der kontinuierlich gekrümmte Hinterholm (26b) näher an eine Spitze (22) der Tragfläche (14) heranragen als der kontinuierlich gekrümmte Zwischenholm (26c).

9. Verfahren nach Anspruch 8, wobei der Schritt zum Ausbilden ein Ausbilden und Härten von einem oder mehreren kontinuierlich gekrümmten Verbundmaterialholmen ohne diskontinuierliche Knickstellen umfasst.

10. Verfahren nach Anspruch 8 oder Anspruch 9, das ferner ein Ausbilden eines Nassbereichs (102) der Tragfläche (14) und ein Ausbilden eines Trockenbereichs (104) der Tragfläche (14) umfasst, wobei sich der eine oder die mehreren kontinuierlich gekrümmten Holme (26) sowohl durch den Nassbereich (102) der Tragfläche (14) als auch durch den Trockenbereich (104) der Tragfläche (14) erstrecken.

## Revendications

1. Surface portante (14) comprenant :
une ou plusieurs régions de confinement de combustible (28) disposées dans la surface portante (14) ; et
un ou plusieurs longerons incurvés en continu (26) s'étendant à partir d'une extrémité d'emplanture (23) de la surface portante (14) vers une extrémité de pointe (22) de la surface portante (14), dans laquelle chacun des longerons incurvés en continu comprend :
une première extrémité (72a), une seconde extrémité (72b) et une partie de corps allongée (74) entre elles ; une configuration unitaire ; et une ou plusieurs courbes continues le long du longeron incurvé en continu ; et
dans laquelle les un ou plusieurs longerons incurvés en continu (26) comprennent :
un longeron avant incurvé en continu (26a) ;
un longeron arrière incurvé en continu (26b) ;
et **caractérisée en ce que** les un ou plusieurs longerons incurvés en continu (26) comprennent en outre :
un longeron intermédiaire incurvé en continu (26c) ;
dans lequel :
la seconde extrémité du longeron intermédiaire incurvé en continu se termine à proximité d'une partie interne (86) de la région de confinement de combustible (28) de sorte que le longeron avant incurvé en continu (26a) et le longeron arrière incurvé en continu (26b) s'étendent plus à proximité de la pointe (22) que le longeron intermédiaire incurvé en continu.

2. Surface portante (14) selon la revendication 1, dans laquelle les une ou plusieurs régions de confinement de combustible comprennent un réservoir de combustible (28a) ou une pile à combustible (28b).

3. Surface portante (14) selon la revendication 1, dans laquelle le longeron avant incurvé en continu (26a) et le longeron arrière incurvé en continu (26b) s'étendent dans le sens de la longueur à travers une section mouillée (102) de la surface portante et une section sèche (104) de la surface portante.

4. Surface portante (14) selon l'une quelconque des revendications précédentes, dans laquelle chacun des un ou plusieurs longerons incurvés en continu (26) comprennent une structure composite unitaire.

5. Surface portante (14) selon l'une quelconque des revendications précédentes, dans laquelle la première extrémité (72a) de chacun des un ou plusieurs longerons incurvés en continu (26) est configurée pour être fixée à une section de fuselage (12a) d'un véhicule aérien (10).

6. Surface portante (14) selon l'une quelconque des revendications précédentes, comprenant en outre une pluralité de nervures (90) fixées de manière sensiblement perpendiculaire à et entre les longerons incurvés en continu (26), et comprenant en outre un panneau rigidifié supérieur (92a) et un panneau rigidifié inférieur (92b) recouvrant les une ou plusieurs régions de confinement de combustible (28), les un ou plusieurs longerons incurvés en continu (26) et la pluralité de nervures (90).

7. Surface portante selon la revendication 8, dans laquelle les un ou plusieurs longerons incurvés en continu (26) n'ont pas de pliures discrètes, se traduisant par une répartition de charge sur la pluralité de nervures (90) et sur les panneaux rigidifiés supérieur (92a) et inférieur (92b), par rapport à une répartition de charge des longerons tordus existants qui concentrent la charge au niveau des pliures discrètes.

8. Procédé pour fabriquer un aéronef (11), le procédé comprenant les étapes consistant à :
former et faire durcir un ou plusieurs longerons incurvés en continu composites (26) comprenant :
un longeron avant incurvé en continu (26a) ; et
un longeron arrière incurvé en continu (26b) ; dans lequel :
chacun du au moins un longeron incurvé en continu (26) a :
une première extrémité (72a), une seconde extrémité (72b) et une partie de corps allongée (74) entre elles ;
une configuration unitaire ; et
une ou plusieurs courbes continues le long du longeron incurvé en continu ;
fixer la première extrémité (72a) de chacun des un ou plusieurs longerons incurvés en continu (26) à une section de fuselage (12a) d'un aéronef (11) et étendre chacun des un ou plusieurs longerons incurvés en continu à partir de la section de fuselage (12a) ;
fixer une pluralité de nervures (90) sensiblement perpendiculaires et entre les un ou plusieurs longerons incurvés en continu (26) ; et
prendre en sandwich chacun des un ou plusieurs longerons incurvés en continu (26), la pluralité de nervures (90) et une région de confinement de combustible (28) entre des panneaux rigidifiés supérieur et inférieur afin de former une surface portante (14) de l'aéronef :
**caractérisé en ce que** les un ou plusieurs longerons incurvés en continu (26) comprennent en outre :
un longeron intermédiaire incurvé en continu (26c) ;
et **en ce que** le procédé comprend en outre l'étape consistant à :
positionner une partie intérieure des un ou plusieurs longerons incurvés en continu (26) pour former une paroi structurelle de la région de confinement de combustible (28) ; et
dans lequel l'étape consistant à étendre les un ou plusieurs longerons incurvés en continu (26) implique l'étape consistant à étendre les longerons incurvés en continu (26) de sorte que la seconde extrémité du longeron intermédiaire incurvé en continu (26c) se termine à proximité d'une partie interne (86) de la région de confinement de combustible (28) et le longeron avant incurvé en continu (26a) et le longeron arrière incurvé en continu (26b) s'étendent plus à proximité d'une pointe (22) de la surface portante (14) que le longeron intermédiaire incurvé en continu (26c).

9. Procédé selon la revendication 8, dans lequel l'étape de formage comprend l'étape consistant à former et faire durcir un ou plusieurs longerons incurvés en continu composites n'ayant pas de pliures discrètes.

10. Procédé selon la revendication 8 ou la revendication 9, comprenant en outre l'étape consistant à former une section mouillée (102) de la surface portante (14) et former une section sèche (104) de la surface portante (14), dans lequel les un ou plusieurs longerons incurvés en continu (26) s'étendent à la fois à travers la section mouillée (102) de la surface portante (14) et la section sèche (104) de la surface portante (14).
